# FASCICULE DE BREVET EUROPEEN

(11) **EP 3 716 073 B1**
(45) Date de publication et mention de la délivrance du brevet: **23.08.2023**
(21) Numéro de dépôt: 20166177.4
(22) Date de dépôt: 27.03.2020
(51) Int. Cl.: G06F 11/30, G06F 11/34, G06F 17/40, G06F 21/55

(54) **SYSTÈME EMBARQUÉ À BORD D'UN AÉRONEF DE DÉTECTION ET DE RÉPONSE AUX INCIDENTS AVEC ENREGISTREMENT DE LOGS**
BORDSYSTEM FÜR LUFTFAHRZEUG ZUR ERKENNUNG VON UND REAKTION AUF VORFÄLLE MIT PROTOKOLLIERUNG
ON-BOARD SYSTEM ON BOARD AN AIRCRAFT FOR DETECTING AND RESPONDING TO INCIDENTS WITH STORAGE OF LOGS

(30) Priorité: 29.03.2019 FR 1903356
(43) Date de publication de la demande: 30.09.2020
(73) Titulaire: Thales, 92400 Courbevoie (FR)
(72) Inventeur: RIVIERE, Dominique, Caroline, 31036 TOULOUSE Cedex 1 (FR); DESCARGUES, Gilles, 31036 TOULOUSE Cedex 1 (FR); FEYT, Nathalie, Véronique, 31036 TOULOUSE Cedex 1 (FR)
(74) Mandataire: Lavoix

(56) Documents cités:
- US-A1- 2008 162 592
- US-A1- 2017 041 331

## Description

La présente invention concerne un système embarqué à bord d'un aéronef de détection et réponse aux incidents avec enregistrement/journalisation de logs à bord d'un aéronef.

Un aéronef comprend au moins un calculateur comprenant une pluralité d'applications utilisant et générant des données. La réception, l'émission de données, le changement d'état d'une application, la réception-émission d'un signal analogique ou discret constitue du point de vue du destinataire un évènement.

Plus précisément, un événement est défini comme étant un flot entrant, c'est-à-dire une donnée, un signal, une interruption vers une application qui peut la détourner de son traitement en cours.

Il est souhaitable de détecter parmi ces événements ceux qui pourraient affecter la sûreté du vol de l'aéronef et qui sont appelés incidents de sécurité.

Un incident est défini comme un ou plusieurs évènements avec un flot, format, contenu, timing ou fréquence non conforme à la spécification ou l'attendu. Un incident peut avoir plusieurs origines : dysfonctionnement de composant matériel ou logiciel, conditions de fonctionnement hors normes, configuration erronée, malveillance, etc.

Parmi les incidents, les incidents de sécurité sont en particulier des incidents d'origine malveillante ou non perturbant les systèmes d'information de l'aéronef et pour lesquels une réponse est souhaitée pour des raisons de sûreté de fonctionnement et de maintien de l'opérabilité de l'aéronef.

Par exemple, les événements peuvent être reliés à des incidents de sécurité tels que des attaques informatiques (symptômes, traces ou résultats recherchés par l'attaquant) introduisant des dysfonctionnements de l'aéronef.

La capacité à détecter ces incidents de sécurité et à y répondre au plus près et donc au plus vite permet d'assurer la sûreté de fonctionnement en prenant donc en compte la sécurité des systèmes d'informations embarqués, c'est le concept communément appelé dans le domaine de l'aéronautique « security for safety » qui veut dire en français la « sécurité pour la sûreté ».

Il est souhaitable de détecter en temps réels, parmi les événements, les incidents de sécurité afin d'en informer le cas échéant l'équipage de l'aéronef.

Dans le domaine des technologies de l'information, il existe des logiciels adaptés pour la surveillance de la sécurité de l'information et de gestion des événements qui sont connus sous l'acronyme SIEM qui signifie en anglais « Security Information and Event Management ».

Ces logiciels sont effectifs à partir de l'analyse de l'ensemble des logs issus des applications constituant les systèmes d'information à surveiller. Ils sont nourris par un grand nombre d'informations, normalisées ou non, et offrent des fonctionnalités d'agrégation, collecte, normalisation analyse et corrélation de ces informations pour identifier une intrusion, un usage illicite du système ou tout autre acte malveillant. Ces dispositifs peuvent être mis à contribution pour effectuer des enregistrements dits à valeurs probantes pour les systèmes d'information le requérant, notamment ceux avec facturation électronique.

De tels logiciels ne peuvent pas actuellement être embarqués à bord des aéronefs pour la surveillance des moyens informatiques alloués au domaine de contrôle du vol, (connu sous l'acronyme ACD qui signifie « Aircraft Control Domain ») non seulement puisqu'ils requièrent des ressources conséquentes de stockage et de puissance de calcul mais surtout puisqu'ils ne disposent pas encore suffisamment de matière (les logs) analysables. En effet, la production de logs par les calculateurs embarqués du domaine du contrôle de vol est inexistante suivant les aéronefs.

Un log est un enregistrement persistant horodaté par un système ou une application d'événements et de leur conséquence qui inclut des données contextuelles et un niveau de sévérité.

Cette production nécessite des moyens informatiques tels qu'une unité centrale de traitement aussi connu sous l'acronyme CPU qui signifie en anglais « Central Processing Unit » ou encore des mémoires non volatiles disponibles de façon limitée pour des raisons de coûts et d'emport. Cela est donc un frein. Il faut ajouter aussi la nécessité d'assurer un haut niveau de qualification des produits issus des exigences de sûreté de fonctionnement comme cela est défini par certaines normes telles que la norme DO 178C.

En outre, ces logiciels demandent de fréquentes mises à jour ou une modification de leur paramétrage nécessitant une maintenance importante qui n'est pas souhaitable.

US 2008/0162592 A1 décrit un système de journalisation pouvant être intégré dans un SIEM comprenant un récepteur d'événements et un gestionnaire de stockage.

US 2017/041331 A1 décrit un système pour détecter et atténuer les effets d'un cyber-événement sur le réseau d'un aéronef, comprenant un module de sécurité en vol et un module de sécurité au sol qui surveillent les réseaux de l'aéronef et détectent les cyber-événements.

Il en résulte qu'actuellement les événements détectés lors du vol de l'aéronef et qui pourraient porter atteinte à la sûreté du vol sont traités mais non enregistrés et encore moins signalés que ce soit au SOC (Acronyme pour « Security Operation Center » en anglais qui signifie en français « centre des opérations de sécurité ») ou à l'équipage.

Le SOC est un centre des opérations de sécurité au sol d'une compagnie aérienne.

La présente invention a pour but de répondre aux problèmes posés en proposant un système embarqué de détections et réponses aux incidents à bord d'un aéronef avec enregistrement d'incidents notamment peu gourmand en termes de puissance de calcul, d'espace de stockage. En outre, l'invention permet de mettre en oeuvre le système embarqué sur les nouveaux aéronefs comme les aéronefs déjà en service.

A cet effet, l'invention concerne un système embarqué à bord d'un aéronef de détection et réponse aux incidents avec enregistrement de logs, l'aéronef comprenant au moins un calculateur comprenant une pluralité d'applications utilisant et générant des données, chaque application étant configurée pour détecter des événements sur la base des données utilisées et générées par cette application et d'informations prédéfinies spécifiant ces événements, le système étant défini selon la revendication 1.

Suivant d'autres aspects avantageux de l'invention, le système comprend une ou plusieurs des caractéristiques des revendications 2 à 13.

Les caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est un schéma synoptique du système selon l'invention, et
- [Fig 2] la figure 2 est une vue de détail d'une partie de la figure 1.

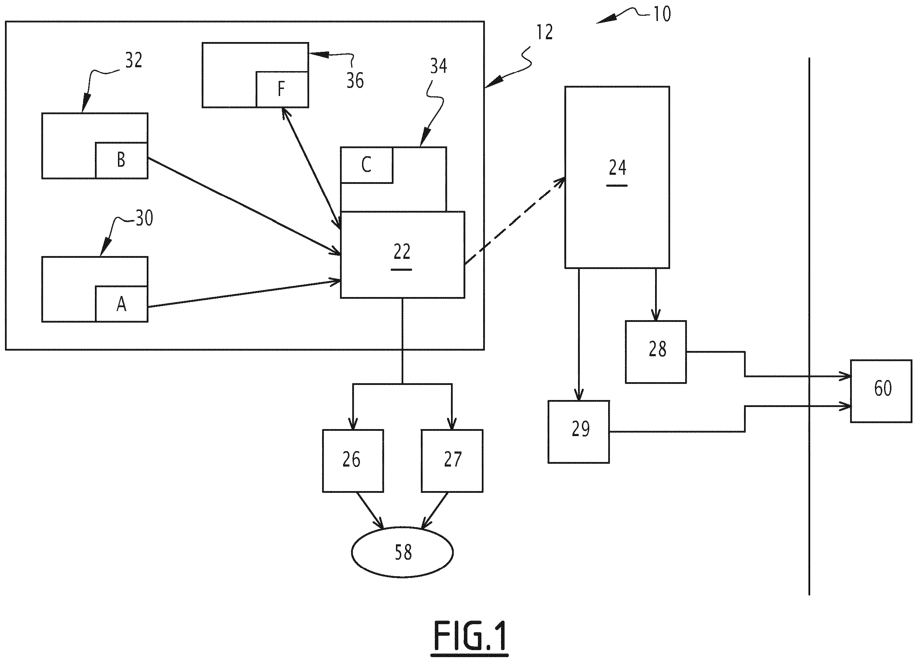

Un système 10 embarqué à bord d'un aéronef de détection et réponse aux incidents avec enregistrement de logs est illustré sur la figure 1.

L'aéronef comprend au moins un calculateur comprenant une pluralité d'applications utilisant et générant des données. Par exemple, l'aéronef comprend une pluralité de calculateurs.

Chaque application est configurée pour détecter des événements sur la base des données utilisées et générées par cette application et d'informations prédéfinies spécifiant ces événements.

Un événement est défini au sens générique comme un flot entrant tel qu'une donnée, un signal, une interruption vers une opération, un système et/ou une application pouvant détourner cette opération, ce système ou cette application de son traitement en cours.

Dans la présente demande le flot entrant correspond aux données utilisées et générées par chaque application 30, 32, 34, 36.

Un seul calculateur 12 est représenté sur la figure 1.

Le système 10 comprend pour le ou chaque calculateur 12 une pluralité d'agents A, B, C, F et au moins un collecteur 22. Chaque agent A, B, C, F est connecté au collecteur 22. Le système 10 comprend, en outre, une unité de centralisation 24, une unité d'alerte 26, une unité d'affichage d'informations 27, une connexion data-link 28 et un serveur sécurisé 29.

Chaque agent A, B, C, F est un composant applicatif dédié à une application identifiée 30, 32, 34, 36 du calculateur 12.

Chaque agent A, B, C, F est configuré pour analyser les événements détectés par les différentes applications 30, 32, 34, 36.

Chaque agent A, B, C, F est configuré pour appliquer une logique de détection d'incidents aux événements détectés par l'application 30, 32, 34, 36 qui lui est dédiée afin de détecter au moins un incident.

Chaque agent A, B, C, F est en outre configuré pour transmettre au collecteur 22 par messages de détection chaque incident détecté suivant une logique de transmission paramétrable.

Le collecteur 22 est configuré pour recevoir les messages de détection en provenance des agents A, B, C, F pour chaque incident détecté et pour appliquer aux messages de détection une logique d'enregistrement paramétrable des messages de détection en un ou plusieurs log(s).

Un incident détecté correspond à un ou plusieurs évènements avec un flot, format, contenu, timing ou fréquence non conforme à la spécification ou l'attendu.

Les incidents peuvent être liés à une attaque contre l'aéronef ou encore être liées à une défaillance d'un matériel de l'aéronef ou encore à une erreur humaine.

Il est souhaitable de déterminer parmi l'ensemble des incidents 42 détectés ceux qui sont des « incidents de sécurité ».

Les incidents de sécurité sont des incidents d'origine malveillante ou non perturbant les systèmes d'information de l'aéronef et pour lesquels une réponse est souhaitée pour des raisons de sûreté de fonctionnement et de maintien de l'opérabilité de l'aéronef.

Ainsi, au moins un incident détecté 42 peut correspondre à une attaque, par exemple une attaque informatique de l'aéronef

Les attaques informatiques sont par exemple des incidents de sécurité d'origine malveillante.

Comme indiqué précédemment, un log est un enregistrement persistant horodaté par un système ou une application d'événements et de leur conséquence qui inclut des données contextuelles et un niveau de sévérité.

Dans le présent exemple de réalisation, le système comprend quatre agents A, B, C, F.

Un premier d'agent est aussi connu sous l'appellation « agent cyber A ». L'agent cyber A est un composant applicatif intégré dans une application opérationnelle 30 du calculateur 12 couplée aux mécanismes de sûreté de fonctionnement du calculateur 12.

L'agent cyber A est configuré pour surveiller des données sensibles. Par donnée sensible, on entend une donnée relative à la sécurité de l'aéronef.

Un deuxième agent est aussi connu sous l'appellation « agent cyber B ». L'agent cyber B est un agent applicatif intégré dans une application support 32 du calculateur 12 au plus près des mécanismes de vérification de domaines d'usage.

L'agent cyber B est configuré pour surveiller les domaines d'usage du système d'exploitation par les applications (traitement des erreurs API (acronyme pour « Application Programming Interface » en anglais qui signifie en français « interface de programmation applicative »), droits d'accès, etc.), les domaines d'usage des applications supports (protocoles de communication, c'est-à-dire par exemple la fréquence de messages et la conformité de ces protocoles) et/ou les domaines d'usage du calculateur 12 (« watch dog » qui signifie littéralement en français « chien de garde », « reset » qui signifie en français « réinitialisation »).

Un troisième agent est connu sous l'appellation « agent cyber C ». L'agent cyber C est un composant applicatif intégré dans une application 34 en charge des téléchargements et de la configuration du calculateur 12.

L'agent cyber C est configuré pour surveiller les échecs de vérification (authentification, intégrité, complétude) et les défauts d'utilisation (compatibilité, conformité, pertinence).

Selon un exemple de réalisation particulier, l'agent cyber C fait partie du collecteur 22.

Un quatrième agent est aussi connu sous l'appellation « agent cyber F ». L'agent cyber F est intégré dans une application 36 configurée pour surveiller un protocole spécifique d'échange de données entre deux applications du même calculateur 12 ou entre le calculateur 12 et un autre calculateur distant.

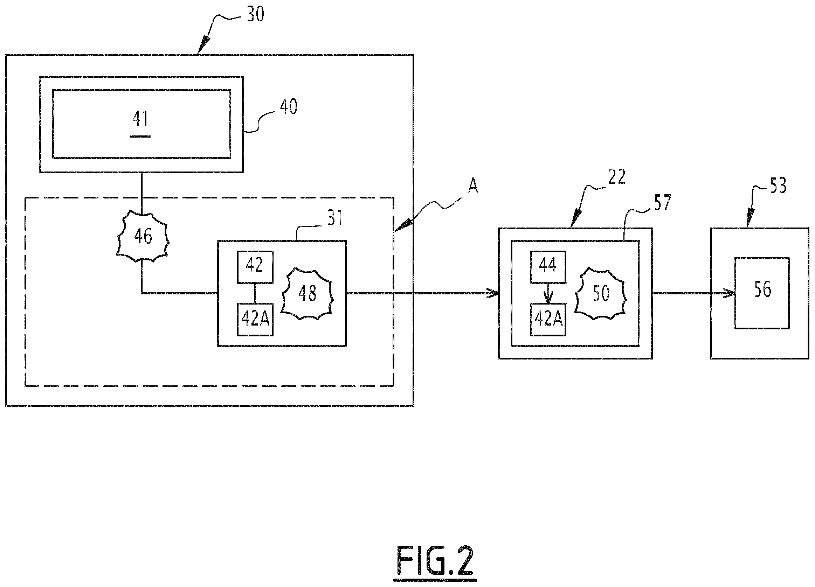

En référence à la figure 2, l'agent cyber A, le collecteur 22 et les logs 56 sont détaillés. Les autres agents cyber B, C, F sont structurellement analogues à l'agent cyber A et ne seront donc pas détaillés par la suite.

Comme indiqué précédemment, l'agent cyber A est dédié à l'application 30.

L'agent cyber A est associé à une mémoire volatile 31 du calculateur 12.

Les données utilisées et générées par l'application 30 sont repérées par la référence numérique 40.

Les données utilisées et générées 40 comprennent des événements 41.

L'application 30 est configurée pour détecter les événements 41 sur la base des données utilisées et générées 40 et d'informations prédéfinies spécifiant ces événements.

L'agent cyber A est configuré pour appliquer une logique de détection 46 d'incidents aux événements détectés 41 par l'application 30 afin de détecter au moins un incident 42

La logique de détection 46 définit au moins un seuil spécifié de la fréquence de détection des événements 41 détectés et/ou au moins un seuil spécifié du nombre d'occurrences d'événements 41 détectés afin de détecter au moins un incident 42.

A titre d'exemple, la logique de détection 46 définit un flot, un format, un contenu, un timing et/ou une fréquence spécifié(s) relatif(s)s aux événements 41 détectés.

La logique de détection 46 est adaptée pour comparer le flot, le format, le contenu, le timing et/ou la fréquence relatif(s) aux événements détectés 41 au flot, au format, au contenu, au timing et/ou à la fréquence spécifié(s).

Les événements 41 qui ne sont pas conformes à la spécification, c'est-à-dire au flot, au format, au contenu, au timing et/ou à la fréquence spécifié(s) forment des incidents 42.

La mémoire volatile 31 est configurée pour mémoriser les incidents 42 détectés par l'agent cyber A.

Les incidents 42 sont identifiés par un identifiant unique qui est représentatif, par exemple, de l'application 30, de l'agent dédié à cette application qui est dans le cas présent l'agent cyber A et d'un type d'incident.

L'agent cyber A est en outre configuré pour transmettre au collecteur 22 par messages de détection 42A chaque incident 42 détecté suivant la logique de transmission 48.

Par exemple, chaque message de détection 42A d'un incident 42 détecté comprend une donnée représentative d'un numéro d'identification de cet incident 42, une donnée représentative de l'occurrence de cet incident 42 ou de la fréquence de détection de cet incident 42, et d'une donnée représentative de la date UTC de génération du message de détection 42A et/ou de la date UTC de détection de l'incident 42.

Plus précisément, pour chaque incident 42 détecté, l'agent cyber A est configuré pour agréger dans la mémoire volatile 31 les messages de détection 42A de cet incident 42 en fonction des paramètres de la logique de transmission 48.

Ce mécanisme d'agrégation permet de réduire au minimum la perturbation du fonctionnement opérationnel de l'application 30 et évite d'introduire de nouvelles vulnérabilités notamment à des attaques en disponibilité.

Par exemple, pour chaque incident 42 détecté, la logique de transmission 48 définit au moins un seuil du nombre d'occurrences de détection de cet incident 42 et/ou au moins un seuil de fréquence de détection de cet incident 42 pour le déclenchement de la transmission des messages de détection 42A de cet incident 42 au collecteur 22.

Autrement dit, pour chaque incident 42 détecté, il est défini au minimum un seuil en termes du nombre d'occurrences de détection de cet incident 42 et/ou au minimum un seuil de fréquence de détection de cet incident 42 qui permet de déclencher la transmission des messages de détection 42A de cet incident 42 de l'agent cyber A vers le collecteur 22.

Ainsi, le dépassement du ou des seuils défini(s) par la logique de transmission est propre à déclencher la transmission des messages de détection 42A au collecteur 22.

A titre d'exemple, dans le cas d'une comptabilisation du nombre d'occurrences de détection d'un incident 42, les paramètres de la logique de transmission 48 définissent un premier seuil du nombre occurrences de cet incident 42 et un deuxième seuil du nombre d'occurrences de cet incident 42.

Lorsque le premier seuil est atteint, l'agent cyber A est configuré pour effectuer une première transmission des messages de détection 42A dudit incident 42 au collecteur 22. Lorsque le deuxième seuil est atteint, l'agent cyber A est configuré pour effectuer une deuxième transmission des messages de détection 42A dudit incident 42.

Selon un exemple particulier de réalisation, les paramètres de la logique de transmission 48 définissent également pour chaque incident 42 détecté un premier mode de transmission des messages de détection 42A ou un deuxième mode de transmission des messages de détection 42A vers le collecteur 22.

Le mode de transmission appliqué dépend de l'incident 42 détecté.

Le premier mode de transmission correspond à la transmission des messages de détection dans le flux d'exécution en cours de l'application 31. Le premier mode de transmission est appliqué pour des incidents détectés 42 qui sont dits « majeurs ».

Le second mode de transmission est un mode de transmission en temps disponible dans une trame temporelle dédiée (mise en cache, traitement en léger différé).

Le collecteur 22 est configuré pour recevoir les messages de détection 42A pour chaque incident détecté 42.

Le collecteur 22 est un composant applicatif. En particulier, le collecteur 22 est configuré pour analyser les messages de détection 42A, les mettre en cache, décider si et quand les enregistrer et avec quelles données.

En outre, le collecteur 22 dispose de données de contexte 44 relatives à l'aéronef et/ou au vol de l'aéronef.

Ainsi, le collecteur 22 est configuré pour associer aux messages de détection 42A reçus les données de contexte 44.

Les données de contexte 44 sont par exemple des données représentatives de l'aéronef et/ou du vol de l'aéronef. Plus précisément, les données de contexte sont par exemple représentatives de la phase de vol courante de l'aéronef, de l'identité de l'aéronef et/ou encore de données représentatives d'un début ou d'une fin de traitement opérationnel sensible.

Le collecteur 22 est en outre configuré pour appliquer aux messages de détection 42A une logique d'enregistrement 50 paramétrable pour enregistrer les messages de détection 42A en un ou plusieurs log(s) 56.

En particulier, pour chaque incident 42 détecté, la logique d'enregistrement 50 définit des paramètres qui définissent au moins un seuil du nombre occurrences de réception des messages de détection 42A de cet incident 42 et/ou au moins un seuil de fréquence de réception des messages de détection 42A de cet incident 42.

Les seuils définis pour la logique de transmission 48 et pour la logique d'enregistrement 50 permettent d'exclure un phénomène accidentel ou transitoire et d'une autre origine qu'un incident de sécurité à l'encontre de l'aéronef.

Pour chaque incident 42 détecté, le collecteur 22 est configuré pour agréger les messages de détection 42A de cet incident 42 en fonction des paramètres de la logique d'enregistrement 50.

Par exemple, le collecteur 22 est associé à une mémoire volatile 57 du calculateur 12.

Par exemple, le collecteur 22 est configuré pour agréger les messages de détection 42 dans la mémoire volatile 57 en fonction des paramètres de la logique d'enregistrement 50 et d'associer à ces messages de détection 42 agrégés les données de contexte 44.

Le collecteur 22 est alors configuré pour enregistrer, pour chaque incident 42 détecté, les messages de détection 42A de cet incident 42 et pour enrichir ces messages de détection 42A avec les données de contexte 44 sous la forme d'un ou plusieurs log(s) 56 dans une mémoire non volatile 53 du calculateur 12 associée au collecteur 22.

Seul le collecteur 22 présente des droits d'accès à la mémoire non volatile 53.

Selon un exemple de réalisation particulier, le collecteur 22 est également configuré pour corréler différents incidents 42 détectés et des données de contexte connues 44.

Par exemple, le collecteur 22 mémorise une table de corrélation qui associe entre eux différents incidents 42 détectés, par exemple en fonction des types d'incidents détectés ou qui associe entre eux différents incidents 42 détectés entre eux et des données de contexte 44 données.

En fonction de la table de corrélation, le collecteur 22 est alors configuré pour corréler plusieurs messages de détection 42A de différents incidents 42 détectés enrichis des données de contexte 44 et de les enregistrer en un ou plusieurs log(s) 56 dans la mémoire non volatile 53.

Le collecteur 22 est configuré pour enregistrer les logs 56 sous un format normalisé prédéfini.

Les logs 56 sont représentatifs d'un ou plusieurs incident(s) de sécurité pour l'aéronef.

Ainsi, le système 10 permet de déterminer parmi les incidents, les incidents de sécurité.

Par exemple, les logs 56 correspondent à une ou plusieurs attaque(s) informatique de l'aéronef.

En référence à la figure 1, l'unité de centralisation 24 est reliée au collecteur 22. Le collecteur 22 est en outre configuré pour transférer les logs 56 enregistrés à l'unité de centralisation 24.

L'unité de centralisation 24 est configurée pour recevoir les logs 56 enregistrés et pour les transférer à un centre des opérations de sécurité (SOC) 60 situé au sol de la compagnie aérienne par l'intermédiaire de la connexion data-link 28 et/ou du serveur de sécurité 29.

L'unité d'alerte 26 est destinée à émettre une ou plusieurs alertes sur la base du ou des log(s) 56 enregistrés, les alertes étant destinées à un équipage 58 de l'aéronef, par exemple, le pilote ou le personnel navigant.

L'unité d'alerte 26 est connectée au collecteur 22.

L'unité d'affichage d'informations 27 est aussi connectée au collecteur 22 et est configurée pour recevoir les logs 56 et délivrer un affichage représentatif de ceux-ci à destination de l'équipage 58 de l'aéronef.

En variante, le système 10 est dépourvu d'unité de centralisation 24. Dans un tel cas, le collecteur 22 est configuré pour transmettre les logs 56 vers le centre sécurité au sol 60.

Ainsi, le collecteur 22 est par exemple propre à mémoriser une logique de transmission prédéfinie et paramétrable des logs 56 vers le centre de sécurité au sol 60.

Le fonctionnement du système 10 selon l'invention est décrit dans la suite.

Le fonctionnement du système 10 est décrit dans la suite en relation avec l'application opérationnelle 30 et l'agent cyber A.

Le système embarqué d'enregistrement 10 présente un fonctionnement analogue avec les autres agents B, C, et F, la seule différence étant la nature des données utilisées et générées par les agents B, C, F.

En référence à la figure 2, l'application opérationnelle 30 détecte des événements 41 en fonction des données utilisées et générées 40 par cette application 30 et d'informations prédéfinies spécifiant ces événements 41.

L'agent cyber A reçoit les événements 41 et applique la logique de détection 46 d'incidents aux événements 41 afin de détecter parmi ces événements 41 au moins un incident 42.

Puis, pour chaque incident 42 détecté, l'agent cyber A génère des messages de détection 42A de cet incident 42.

En outre, pour chaque incident 42 détecté, l'agent cyber A, agrège les messages de détection 42A générés en fonction des paramètres de la logique de transmission 48 dans la mémoire volatile 31.

Ce mécanisme de mise en cache optimisé permet d'agréger localement les messages de détection 42A avec la possibilité de vérifier le nombre d'occurrences de détection de l'incident 42 ou la fréquence de détection de l'incident 42 par comparaison aux seuils définis par les paramètres de la logique de transmission 48.

Ce mécanisme de mise en cache optimisée permet alors de vérifier le nombre d'occurrences d'un d'incident 42 et/ou la fréquence de détection de l'incident 42 et de comparer ce nombre et/ou cette fréquence aux seuils définis par les paramètres de la logique de transmission 48 avant de transmettre les messages de détection 42A au collecteur 22.

Selon un exemple de réalisation particulier, pour chaque incident 42 détecté, la logique de transmission 48 définit un premier seuil et un deuxième seuil du nombre d'occurrences de détection de cet incident 42, comme cela a été décrit précédemment. Alors, pour chaque incident 42 détecté, lorsque le premier seuil du nombre d'occurrences de détection de cet incident 42 est atteint, l'agent cyber A transmet les messages de détection 42A agrégés via une première transmission au collecteur 22. En outre, lorsque le deuxième seuil du nombre d'occurrences de détection de cet incident 42 est atteint, l'agent cyber A transmet via une deuxième transmission les messages de détection 42A agrégés au collecteur 22.

Lorsque le collecteur 22 reçoit les messages de détection 42A, le collecteur 22 enrichit les messages de détection 42A reçus avec les données de contexte 44.

Puis, le collecteur 22 applique la logique d'enregistrement 50 aux messages de détection 42A reçus de l'agent cyber A.

Pour chaque incident 42 détecté, l'agent cyber A, agrège les messages de détection 42A en fonction des paramètres de la logique d'enregistrement 50 enrichis des données de contexte 44.

Plus précisément et selon un mode de réalisation particulier, pour chaque incident 42 détecté, lorsque le seuil du nombre d'occurrences de messages de détection 42A de cet incident 42 et/ou lorsque le seuil de fréquence de réception des messages de détection 42A de cet incident 42 défini(s) pour la logique d'enregistrement 50 est atteint, le collecteur 22 enregistre les messages 42A agrégés et enrichis des données de contexte 44 sous la forme d'un ou plusieurs log(s) 56 dans la mémoire non-volatile 53.

Selon un exemple de réalisation particulier, le collecteur 22 effectue une corrélation entre les messages de détection 42A de plusieurs incidents 42 différents et les données d'état connues 44 qui sont également enregistrés en un ou plusieurs log(s) 56.

Par exemple, cette corrélation est effectuée par l'intermédiaire de la table de corrélation mémorisée dans la mémoire non-volatile du collecteur 22.

En référence à la figure 1, les logs 56 sont transmis à l'unité de centralisation 24 via le collecteur 22 qui est connecté à l'unité de centralisation 24.

Sur la base des logs 56, le collecteur 22 active l'unité d'alerte 26 à destination de l'équipage 58 de l'aéronef et/ou l'unité d'affichage 27.

En outre, l'unité de centralisation 24 transmet les logs 56 au centre de sécurité 60 au sol via la connexion data-link 28 et/ou via le serveur sécurisé 29.

Le système embarqué 10 selon l'invention permet l'identification et l'enregistrement d'incidents de sécurité à bord de l'aéronef en temps réel et est peu coûteux en capacité de stockage et en puissance de calcul.

En effet, grâce au système selon l'invention, il est possible de déterminer parmi les incidents, les incidents de sécurité.

En particulier, le fait que les agents cyber A, B, C, F et le collecteur 22 soient configurés de sorte que la détection des incidents 42 et l'enregistrement des logs 56 soient indépendantes permet de ne pas entraîner une surcharge des applications et de ne pas dérouter l'application de sa tâche courante.

En outre, les deux niveaux d'agrégation, l'un au niveau des agents A, B, C, F et l'autre au niveau du collecteur 22 permet d'obtenir un système 10 embarqué résilient à la survenue massives d'incidents, qu'ils soient malveillants, c'est-à-dire symptomatique d'une attaque, ou associés à des défaillances.

La logique de transmission 48 et la logique d'enregistrement mises en oeuvre permettent d'exclure un phénomène accidentel ou transitoire et d'une autre origine qu'un incident de sécurité à l'encontre de l'aéronef. Ainsi, l'invention permet de déterminer parmi les événements, les incidents de sécurité et de générer des logs relatifs à ces incidents de sécurité.

En outre, le fait que l'équipage peut être alerté en temps réel de l'enregistrement de logs 56 et donc de la survenue d'incidents de sécurité, cela permet à l'équipage de prendre le plus rapidement possible des mesures adéquates relatives à ces incidents de sécurité.

Par ailleurs, l'octroi des accès en mémoire non volatile 53 au seul collecteur 22 permet de limiter l'introduction de nouvelles vulnérabilités.

En outre, le système 10 selon l'invention peut être mis en oeuvre sur les nouveaux aéronefs. Il permet le traitement des architectures dites « legacy », c'est-à-dire qu'il peut être introduit sur des aéronefs en exploitation au fur et à mesure.

Le système 10 selon l'invention est également adaptable. Il peut être introduit dans l'aéronef de manière incrémentale. Autrement dit, des applications dépourvues d'agent peuvent cohabiter avec des applications comprenant des agents A, B, C, F sur le même calculateur 12.

Encore un autre avantage du système selon l'invention concerne l'intégration de la solution dans les procédures opérationnelles existantes issues de l'application des recommandations sur la maintenance ARINC 624-1.

Le système selon l'invention n'a aucun impact sur les procédés opérationnels (suivi des recommandations ARINC 811).

En outre, grâce au système selon l'invention, aucune compétence cyber n'est requise à bord de l'aéronef ou en MRO (acronyme qui signifie en anglais « Maintenance, Repair, and Overhaul » et qui signifie en français « Maintenance, Réparation et Révision ».

Ainsi, pour chaque incident 42 détecté, la logique de transmission 48 est configurée pour déclencher ou non la transmission des messages de détection 42A de cet incident 42 en fonction des paramètres définis pour la logique de transmission 48.

En outre, pour chaque incident 42 détecté, la logique d'enregistrement 50 est configurée pour déclencher l'enregistrement ou non des messages de détection 42A pour cet incident 42 en fonction des paramètres définis pour cette logique d'enregistrement 50.

## Revendications

1. Système (10) embarqué à bord d'un aéronef de détection et réponse aux incidents avec enregistrement de logs, l'aéronef comprenant au moins un calculateur (12) comprenant une pluralité d'applications (30, 32, 34, 36) utilisant et générant des données (40),
le système étant **caractérisé en ce que**
chaque application (30, 32, 34, 36) étant configurée pour détecter des événements (41) sur la base des données utilisées et générées (40) par cette application (30, 32, 34, 36) et d'informations prédéfinies spécifiant ces événements (41),
le système (10) comprenant pour le ou chaque calculateur (12) un agent (A, B, C, F) et un collecteur (22),
l'agent (A, B, C, F) étant un composant applicatif dédié à une application identifiée (30, 32, 34, 36) du calculateur (12) et étant configuré pour appliquer une logique de détection (46) d'incidents aux événements détectés (41) par l'application identifiée (30, 32, 34, 36) afin de détecter parmi ces événements au moins un incident (42) et pour transmettre au collecteur (22) par messages de détection (42A) chaque incident (42) détecté suivant une logique de transmission (48) paramétrable, et
le collecteur (22) étant configuré pour recevoir les messages de détection (42A) en provenance de l'agent (A, B, C, F) pour chaque incident détecté (42) et pour appliquer aux messages de détection (42A) une logique d'enregistrement (50) paramétrable des messages de détection (42A) en un ou plusieurs log(s) (56),
pour chaque incident (42) détecté, la logique d'enregistrement (50) définissant au moins un seuil du nombre d'occurrences de messages de détection (42A) de cet incident (42) et/ou au moins un seuil de fréquence de réception des messages de détection (42A) de cet incident (42).

2. Système selon la revendication 1, dans lequel l'agent (A, B, C, F) et le collecteur (22) sont configurés de sorte que la détection des incidents (42) en fonction de la logique de détection (46) et l'enregistrement des messages de détection (42A) en un ou plusieurs log(s) (56) en fonction de la logique d'enregistrement (50) soient mises en oeuvre de manière indépendante au sein du système (10) embarqué.

3. Système selon la revendication 1 ou 2, dans lequel la logique de détection (46) définit au moins un seuil spécifié de la fréquence de détection des événements (41) et/ou au moins un seuil spécifié du nombre d'occurrences des événements (41) afin de détecter au moins un incident (42).

4. Système selon l'une quelconque des revendications précédentes, comprenant une pluralité d'agents (A, B, C, F), chaque agent étant analogue audit agent et, de préférence, correspondant à l'un des agents de la liste suivante :
- un agent (A) intégré dans une application opérationnelle (30) du calculateur (12),
- un agent (B) intégré dans une application support (32) du calculateur (12),
- un agent (C) intégré dans une application (34) en charge des téléchargements et de la configuration du calculateur (12),
- un agent (F) de surveillance d'un protocole spécifique d'échanges de données entre deux applications du même calculateur (12) ou entre le calculateur (12) et un autre calculateur distant.

5. Système selon l'une quelconque des revendications précédentes, dans lequel l'agent est un agent (C) intégré dans une application (34) en charge des téléchargements et de la configuration du calculateur (12) et fait partie du collecteur (22).

6. Système selon l'une quelconque des revendications précédentes, dans lequel la logique transmission (48) définit des paramètres et dans lequel l'agent (A, B, C, F) est configuré pour agréger les messages de détection (42A) de cet incident (42) en fonction des paramètres de la logique de transmission (48).

7. Système selon l'une quelconque des revendications précédentes, dans lequel pour chaque incident (42) détecté, la logique de transmission (48) définit au moins un seuil du nombre d'occurrences de détection de cet incident (42) et/ou au moins un seuil de fréquence de détection de cet incident (42) pour le déclenchement de la transmission des messages de détection (42A) de cet incident (42) au collecteur (22).

8. Système selon l'une quelconque des revendications précédentes, dans lequel la logique d'enregistrement (50) définit des paramètres et dans lequel, pour chaque incident (42) détecté, le collecteur (22) est configuré pour agréger les messages de détection (42A) de cet incident (42) en fonction des paramètres de la logique d'enregistrement (50).

9. Système selon l'une quelconque des revendications précédentes, dans lequel le collecteur (22) dispose de données de contexte (44) relatives à l'aéronef et/ou au vol de l'aéronef et est configuré pour enrichir le ou les log(s) (56) avec les données de contexte (44).

10. Système selon l'une quelconque des revendications précédentes, dans lequel le collecteur (22) est configuré pour enregistrer le ou les log(s) (56) sous un format normalisé prédéfini.

11. Système selon l'une quelconque des revendications précédentes, dans lequel au moins un incident détecté (42) correspond à une attaque informatique de l'aéronef.

12. Système selon l'une quelconque des revendications précédentes, comprenant, en outre, une unité d'alerte (26) destinée à émettre une ou plusieurs alertes en temps réel sur la base du ou des log(s) (56), les alertes étant destinées à un équipage (58) de l'aéronef.

13. Système selon l'une quelconque des revendications précédentes, comprenant des moyens de transmission (22, 24) configurés pour transférer le ou les log(s) (56) à un centre de sécurité au sol (60).

## Patentansprüche

1. System (10) an Bord eines Luftfahrzeugs zum Erkennen von und Reagieren auf Störfälle mit Log-Registrierung, das Luftfahrzeug umfassend mindestens einen Rechner (12), umfassend eine Vielzahl von Anwendungen (30, 32, 34, 36), die Daten (40) verwenden und erzeugen, wobei das System **dadurch gekennzeichnet ist, dass** jede Anwendung (30, 32, 34, 36) konfiguriert ist, um Ereignisse (41) basierend auf Daten, die von dieser Anwendung (30, 32, 34, 36) verwendet und erzeugt (40) werden, und vordefinierten Informationen, die diese Ereignisse (41) spezifizieren, zu erkennen,
das System (10) umfassend für den oder jeden Rechner (12) einen Agenten (A, B, C, F) und einen Kollektor (22),
wobei der Agent (A, B, C, F) eine Anwendungskomponente ist, die einer identifizierten Anwendung (30, 32, 34, 36) des Rechners (12) dediziert ist und konfiguriert ist, um eine Erkennungslogik (46) von Störfällen auf die Ereignisse (41) anzuwenden, die von der Anwendung (30, 32, 34, 36) erkannt werden, um unter diesen Ereignissen mindestens einen Störfall (42) zu erkennen und um jeden erfassten Störfall (42) gemäß einer parametrierbaren Übertragungslogik (48) durch Erkennungsmeldungen (42A) an den Kollektor (22) zu übertragen, und
wobei der Kollektor (22) konfiguriert ist, um die Erkennungsmeldungen (42A) von dem Agenten (A, B, C, F) für jeden erkannten Störfall (42) zu empfangen und auf die Erkennungsmeldungen (42A) eine parametrierbare Registrierungslogik (50) der Erkennungsmeldungen (42A) in einem oder mehrere Log(s) (56) anzuwenden,
für jeden erkannten Störfall (42) die Registrierungslogik (50) mindestens einen Schwellenwert für die Anzahl des Auftretens von Erkennungsmeldungen (42A) dieses Störfalls (42) und/oder mindestens einen Schwellenwert für die Häufigkeit eines Empfangens von Erkennungsmeldungen (42A) dieses Störfalls (42) definiert.

2. System nach Anspruch 1, wobei der Agent (A, B, C, F) und der Kollektor (22) konfiguriert sind, sodass die Erkennung von Störfällen (42) gemäß der Erkennungslogik (46) und die Registrierung der Erkennungsmeldungen (42A) in einem oder mehrere Log(s) (56) gemäß der Registrierungslogik (50) innerhalb des eingebetteten Systems (10) unabhängig voneinander implementiert sind.

3. System nach Anspruch 1 oder 2, wobei die Erkennungslogik (46) mindestens einen spezifizierten Schwellenwert für die Häufigkeit eines Erkennens von Ereignissen (41) und/oder mindestens einen spezifizierten Schwellenwert der Anzahl eines Auftretens von Ereignissen (41) definiert, um mindestens einen Störfall (42) zu erkennen.

4. System nach einem der vorherigen Ansprüche, umfassend eine Vielzahl von Agenten (A, B, C, F) umfasst, wobei jeder Agent analog zu dem genannten Agenten ist und vorzugsweise einem der Agenten aus der folgenden Liste entspricht:
- ein Agent (A), der in eine Betriebsanwendung (30) des Rechners (12) integriert ist,
- ein Agent (B), der in eine Trägeranwendung (32) des Rechners (12) integriert ist,
- ein Agent (C), der in eine Anwendung (34) integriert ist, die für Herunterladen und Konfigurieren des Rechners (12) zuständig ist,
- ein Agent (F) zum Überwachen eines spezifischen Protokolls für Datenaustausch zwischen zwei Anwendungen desselben Rechners (12) oder zwischen dem Rechner (12) und einem anderen entfernten Rechner.

5. System nach einem der vorherigen Ansprüche, wobei der Agent ein Agent (C) ist, der in eine Anwendung (34) integriert ist, die für Herunterladen und Konfigurieren des Rechners (12) zuständig ist, und Teil des Kollektors (22) ist.

6. System nach einem der vorherigen Ansprüche, wobei die Übertragungslogik (48) Parameter definiert und wobei der Agent (A, B, C, F) konfiguriert ist, um die Erkennungsmeldungen (42A) dieses Störfalls (42) abhängig von Parametern der Übertragungslogik (48) zu aggregieren.

7. System nach einem der vorherigen Ansprüche, wobei die Übertragungslogik (48) für jeden erkannten Störfall (42) mindestens einen Schwellenwert der Anzahl des Auftretens einer Erkennung dieses Störfalls (42) und/oder mindestens eine Schwellenwert für die Erkennung dieses Störfalls (42) zum Auslösen der Übertragung von Erkennungsmeldungen (42A) dieses Störfalls (42) an den Kollektor (22) definiert.

8. System nach einem der vorherigen Ansprüche, wobei die Registrierungslogik (50) Parameter definiert und wobei Kollektor (22) für jeden erkannten Störfall (42) konfiguriert ist, um Erkennungsmeldungen (42A) dieses Störfalls (42) abhängig von den Parametern der Registrierungslogik (50) zu aggregieren.

9. System nach einem der vorherigen Ansprüche, wobei der Kollektor (22) über Kontextdaten (44) in Bezug auf das Luftfahrzeug und/oder den Flug des Luftfahrzeugs verfügt und konfiguriert ist, um das oder die Log(s) (56) mit den Kontextdaten (44) anzureichern.

10. System nach einem der vorherigen Ansprüche, wobei der Kollektor (22) konfiguriert ist, um das oder die Log(s) (56) in einem vordefinierten standardisierten Format zu registrieren.

11. System nach einem der vorherigen Ansprüche, wobei mindestens ein erkannter Störfall (42) einem Computerangriff auf das Luftfahrzeug entspricht.

12. System nach einem der vorherigen Ansprüche, ferner umfassend eine Warneinheit (26), die dazu bestimmt ist, um eine oder mehrere Warnungen in Echtzeit basierend auf dem oder den Log(s) (56) auszugeben, wobei die Warnungen für eine Besatzung (58) des Luftfahrzeugs bestimmt sind.

13. System nach einem der vorherigen Ansprüche, umfassend Übertragungseinrichtungen (22, 24), die konfiguriert sind, um das oder die Log(s) (56) an eine Sicherheitszentrale am Boden (60) zu übertragen.

## Claims

1. An embedded system (10) on board an aircraft for detection and response to incidents with log recording, the aircraft comprising at least one calculator (12) comprising a plurality of applications (30, 32, 34, 36) using and generating data (40),
the system being **characterized in that**:
each application (30, 32, 34, 36) being configured to detect events (41) based on data used and generated (40) by this application (30, 32, 34, 36) and predefined information specifying these events (41),
the system (10) comprising, for the or each calculator (12), an agent (A, B, C, F) and a collector (22),
the agent (A, B, C, F) being an application component dedicated to an identified application (30, 32, 34, 36) of the calculator (12) and being configured to apply an incident detection logic (46) to the events detected (41) by the identified application (30, 32, 34, 36) in order to detect, among these events, at least one incident (42) and to send to the collector (22) through detection messages (42A) each detected incident (42) according to a configurable transmission logic (48), and
the collector (22) being configured to receive the detection messages (42A) coming from the agent (A, B, C, F) for each detected incident (42) and to apply, to the detection messages (42A), a configurable recording logic (50) of the detection messages (42A) in one or several log(s) (56),
for each detected incident (42), the recording logic (50) defines at least one threshold of the number of occurrences of detection messages (42A) of this incident (42) and/or at least one reception frequency threshold of the detection messages (42A) of this incident (42).

2. The system according to claim 1, wherein the agent (A, B, C, F) and the collector (22) are configured such that the detection of the incidents (42) in function of the detection logic (46) and the recording of the detection messages (42A) in one or several log(s) (56) in function of the recording logic (50) are implemented independently within the embedded system (10).

3. The system according to claim 1 or 2, wherein the detection logic (46) defines at least one specified threshold of the detection frequency of the events (41) and/or at least one specified threshold of the number of occurrences of the events (41) in order to detect at least one incident (42).

4. The system according to any one of the preceding claims, comprising a plurality of agents (A, B, C, F), each agent being similar to said agent and, preferably, corresponds to one of the agents from the following list:
- an agent (A) integrated into an operational application (30) of the calculator (12),
- an agent (B) integrated into a support application (32) of the calculator (12),
- an agent (C) integrated into an application (34) responsible for downloads and configuration of the calculator (12),
- an agent (F) monitoring a specific protocol for data exchanges between two applications of the same calculator (12) or between the calculator (12) and another remote calculator.

5. The system according to any one of the preceding claims, wherein the agent is an agent (C) integrated into an application (34) responsible for downloads and the configuration of the calculator (12) and belongs to the collector (22).

6. The system according to any one of the preceding claims, wherein the transmission logic (48) defines parameters and wherein the agent (A, B, C, F) is configured to aggregate the detection messages (42A) of this incident (42) in function of the parameters of the transmission logic (48).

7. The system according to any one of the preceding claims, wherein for each detected incident (42), the transmission logic (48) defines at least one threshold of the number of detection occurrences of this incident (42) and/or at least one detection frequency threshold of this incident (42) for the triggering of the transmission of the detection messages (42A) of this incident (42) to the collector (22).

8. The system according to any one of the preceding claims, wherein the recording logic (50) defines parameters and, for each detected incident (42), the collector (22) is configured to aggregate the detection messages (42A) of this incident (42) in function of the parameters of the recording logic (50).

9. The system according to any one of the preceding claims, wherein the collector (22) has context data (44) relative to the aircraft and/or the flight of the aircraft and is configured to enrich the log(s) (56) with the context data (44).

10. The system according to any one of the preceding claims, wherein the collector (22) is configured to record the log(s) (56) in a predefined normalized format.

11. The system according to any one of the preceding claims, wherein at least one detected incident (42) corresponds to a computer attack of the aircraft.

12. The system according to any one of the preceding claims, further comprising an alert unit (26) intended to emit one or several alerts in real time based on the log(s) (56), the alerts being intended for a crew (58) of the aircraft.

13. The detection system according to any one of the preceding claims, comprising transmission means (22, 24) configured to transfer the log(s) (56) to a security center on the ground (60).
